# EUROPÄISCHE PATENTSCHRIFT

(11) **EP 3 172 433 B1**
(45) Veröffentlichungstag und Bekanntmachung des Hinweises auf die Patenterteilung: **03.11.2021**
(21) Anmeldenummer: 15735682.5
(22) Anmeldetag: 08.07.2015
(51) Int. Cl.: F03D 1/00, F03D 1/06, F03D 13/40

(54) **WINDENERGIEANLAGEN-ROTORBLATT-HINTERKANTENSEGMENT**
WIND TURBINE ROTOR BLADE TRAILING EDGE SEGMENT
SEGMENT DE BORD DE FUITE D'UNE PALE DE ROTOR D'UNE ÉOLIENNE

(30) Priorität: 22.07.2014 DE 102014214220
(43) Veröffentlichungstag der Anmeldung: 31.05.2017
(73) Patentinhaber: Wobben Properties GmbH, 26607 Aurich (DE)
(72) Erfinder: SPIETH, Falk, 26603 Aurich (DE); RUBNER, Florian, 26607 Aurich (DE); WENK, Christoph, 26524 Hage (DE)
(74) Vertreter: Eisenführ Speiser
(86) Internationale Anmeldenummer: PCT/EP2015/065566
(87) Internationale Veröffentlichungsnummer: WO 2016/012239

(56) Entgegenhaltungen:
- WO-A1-2013/083481
- WO-A2-2011/088835
- JP-A- 2012 225 180

## Beschreibung

Die Erfindung betrifft ein Hinterkantensegment zum Vergrößern einer Profiltiefe eines Rotorblatts einer Windenergieanlage, ein Rotorblatt sowie eine Windenergieanlage. Zudem betrifft die Erfindung eine Kopplungseinrichtung.

Windenergieanlagen sind allgemein bekannt. Für die Effizienz der Windenergieanlage ist das Design des bzw. der Rotorblätter ein wichtiger Aspekt. Eine Möglichkeit ein solches Rotorblatt leistungsfähiger und effizienter zu gestalten, ist die Ausführungsform des Rotorblatts. Insbesondere im Bereich der Rotorblattwurzel, also im Bereich an dem das Rotorblatt an die Nabe angebracht wird, ist es sinnvoll das Rotorblatt mit einer großen Profiltiefe auszugestalten. Die maximale Profiltiefe des Rotorblatts, also die Länge des Rotorblatts zwischen Hinterkante und Rotorblattnase, nimmt sehr nahe am Endbereich des Rotorblatts auf der Seite der Rotornabe ihren maximalen Wert an. Eine solche Vergrößerung der Profiltiefe im Bereich der Rotorblattwurzel kann Wirbelerzeugungen an dieser Stelle reduzieren und führt somit zu einer Effizienzsteigerung der Windenergieanlage.

Eine solche Vergrößerung der Profiltiefe des Rotorblatts kann insbesondere bei größeren Windenergieanlagen mit Rotormessern größer als 80 Meter zu Problemen beim Transport solcher Rotorblätter führen. Solche Rotorblätter können in ihrer maximalen Profiltiefe eine Größe von 5 Metern oder mehr aufweisen. Somit wird es schwierig bzw. teilweise unmöglich bei dem Transport beispielsweise über Land mit einem solchen Rotorblatt unter einer Brücke hindurch zu fahren. Somit müssen teilweise Umwege in Kauf genommen werden, so dass ein Transport nur unter sehr großem Aufwand möglich ist.

Zur Lösung dieses Problems ist bereits bekannt ein Rotorblatt mit einem separaten Hinterkantensegment herzustellen, das erst vor Ort, also an dem Standort der Windenergieanlage an das Rotorblatt angebracht wird. Somit kann die Höhe des Rotorblatts für den Transport wesentlich verringert werden, wodurch auch der logistische Aufwand beim Transport verringert wird. Solche bekannten Hinterkantensegmente sind jedoch häufig kompliziert an das Rotorblatt anzubringen. Insbesondere ein Anbringen des Hinterkantensegments am Standort der Windenergieanlage ist oft kompliziert, der Montageaufwand hoch und somit der Zeitaufwand des Aufbaus der gesamten Anlage vor Ort hoch.

Zur Lösung dieses Problems ist bereits aus dem Dokument DE 10 2012 209 935 A1 ein Hinterkasten für ein Rotorblatt bekannt, das ein Kopfsegment und ein Fußsegment aufweist. Das Kopfsegment und das Fußsegment sind dabei miteinander koppelbar. Problematisch hierbei ist, dass teilweise eine notwendig genaue Fertigung nicht eingehalten werden kann. Zudem ist die Krafteinleitung bei einer solchen Verbindung einseitig, wodurch ein Moment auf das Verbindungselement wirkt. Da gerade im Bereich der Rotorblattwurzel hohe Lasten auf das Rotorblatt wirken, kann diese Momentenwirkung bei starkem Wind zu einer Schädigung der Verbindung führen.

In der prioritätsbegründenden deutschen Patentanmeldung hat das Deutsche Patent- und Markenamt die folgenden Dokumente recherchiert: DE 10 2012 209 935 A1, DE 10 2006 022 279 A1, DE 20 2011 103 091 U1 und DE 10 2013 101 232 A1.

Ein weiteres Beispiel aus dem Stand der Technik ist aus WO2011/088835 bekannt.

Der vorliegenden Erfindung lag somit die Aufgabe zugrunde, wenigstens eines der oben genannten Probleme zu adressieren, insbesondere soll eine Lösung vorgeschlagen werden, die eine verbesserte Anbindung eines Hinterkantensegments an ein Windenergieanlagen-Rotorblatt gewährleistet.

Aufgabe der vorliegenden Erfindung ist es insbesondere, die Lasteinleitung in den Verbindungsbereich zu verbessern. Zumindest soll eine alternative Lösung geschaffen werden.

Zur Lösung der Aufgabe wird ein Windenergieanlagen-Rotorblatt-Hinterkantensegment zum Vergrößern einer Profiltiefe eines Rotorblatts einer Windenergieanlage vorgeschlagen. Das Hinterkantensegment umfasst dabei wenigstens ein Innenblattsegment mit einer Innenblattschale und wenigstens ein Mittelblattsegment mit einer Mittelblattschale. Dabei sind das wenigstens eine Mittelblattsegment und das wenigstens eine Innenblattsegment über eine Kopplungseinrichtung miteinander koppelbar und die Kopplungseinrichtung weist wenigstens ein Schalenelement mit zwei parallel zueinander angeordneten Innenseiten auf, die ausgeführt sind, um einen Aufnahmeraum zum Aufnehmen wenigstens einer der Innenblattschale oder Mittelblattschale zu bilden. Die zwei Innenseiten sind jeweils ausgeführt, um mit wenigstens einer der Innenblattschale oder Mittelblattschale verbindbar zu sein, derart, dass eine auf das Hinterkantensegment wirkende Kraft zentrisch in die Kopplungseinrichtung eingeleitet wird.

Durch ein erfindungsgemäßes Hinterkantensegment wird die Profiltiefe derart vergrößert, dass störende Wirbel im Bereich der Rotorblattwurzel reduziert bzw. sogar vermieden werden können. Das Hinterkantensegment ist dabei in wenigstens zwei Teilsegmente, nämlich das Innenblattsegment und das Mittelblattsegment, unterteilt. Das Mittelblattsegment weist vorzugsweise eine Verbindungsseite zum Verbinden mit einem Außenblattsegment auf, das sich über die gesamte Länge des Rotorblatts erstreckt. Es ist zumindest teilweise zwischen dem Außenblattsegment und dem Innenblattsegment vorgesehen. Unter einem Innenblattsegment ist vorliegend ein Segment zu verstehen, das die Hinterkante des Rotorblatts aufweist. Die Nase des Rotorblatts ist an dem Außenblattsegment vorgesehen. Insbesondere kann das Hinterkantensegment mehrere Innenblattsegmente, also mehr als eins, vorzugsweise zwei oder drei Innenblattsegmente umfassen. Diese sind mit einem einzigen Mittelblattsegment koppelbar oder mit mehreren Mittelblattsegmenten, insbesondere zwei oder drei Mittelblattsegmenten. Das Innenblattsegment und das Mittelblattsegment sind dabei insbesondere in dem unteren Bereich des Rotorblatts angeordnet, also in dem Bereich in der Nähe der Rotorblattwurzel des Rotorblatts. Sie erstrecken sich dabei insbesondere nicht über die gesamte Länge des Rotorblatts.

Das Mittelblattsegment und das Innenblattsegment sind über eine Kopplungseinrichtung miteinander koppelbar, sie werden also durch die Kopplungseinrichtung miteinander verbunden. Eine solche Kopplungseinrichtung weist wenigstens ein Schalenelement auf. Das Schalenelement weist zwei parallel zueinander angeordnete Innenseiten auf, die einen Aufnahmeraum zum Aufnehmen der Innenblattschale und/oder Mittelblattschale aufweist. Die Innenblattschale und/oder Mittelblattschale ist dabei insbesondere im Innern des Hinterkantensegments angeordnet, so dass das aerodynamische Verhalten des Rotorblatts durch die Kopplungseinrichtung nicht gestört wird. Der Aufnahmeraum ist insbesondere an die Dicke der Innenblattschale und/oder Mittelblattschale angepasst, so dass die Innenblattschale und/oder Mittelblattschale in den Aufnahmeraum eingeführt werden kann. Die Innenblattschale und/oder Mittelblattschale sind dann mit den zwei Innenseiten des Schalenelements der Kopplungseinrichtung verbindbar. Insbesondere sind das Schalenelement und die Innenblattschale und/oder Mittelblattschale mit dem Schalenelement der Kopplungseinrichtung verklebt. Die Innenblattschale und/oder Mittelblattschale ist demnach mit zwei Seiten, insbesondere mit beiden Außenseiten, also beidseitig mit den zwei Innenseiten des Schalenelements verbindbar. Dadurch wird eine auf das Rotorblatt und somit auch auf das Hinterkantensegment wirkende Kraft über zwei Seiten gleichmäßig in die Kopplungseinrichtung eingeleitet und an einem Ende, an dem die beiden Innenseiten zusammenlaufen zentrisch in die Kopplungseinrichtung eingeführt. Somit wird die Entstehung von Momenten bei der Lasteinleitung in die Kopplungseinrichtung vermieden. Die Gefahr einer Schädigung der Kopplungseinrichtung wird reduziert.

Das Mittelblattsegment kann dabei vorteilhafterweise bereits in der Fertigungshalle an das Außenblattsegment angebracht sein. Beim Errichten einer Windenergieanlage muss dann nur noch das Innenblattsegment an das Mittelblattsegment gekoppelt werden. Dadurch ist der Montageaufwand am Standort der Windenergieanlage reduziert.

Vorzugsweise weist das wenigstens eine Schalenelement eine Ausnehmung zum Aufnehmen eines ersten Kopplungselements auf. Das erste Kopplungselement wird also separat zu dem Schalenelement, also als Einzelelement, hergestellt. Dadurch wird eine genaue Fertigung der einzelnen Elemente der Kopplungseinrichtung gewährleistet. Fertigungstoleranzen können problemlos eingehalten werden. Das erste Kopplungselement ist dabei insbesondere passgenau zu dem Schalenelement gefertigt, so dass es in das Schalenelement eingesetzt werden kann.

In einer bevorzugten Ausführungsform weist das erste Kopplungselement eine Öffnung zum Aufnehmen eines zweiten Kopplungselements zum Herstellen der Kopplung des Innenblattsegments mit dem Mittelblattsegment auf. Das zweite Kopplungselement wird dabei in die Öffnung des ersten Kopplungselements eingeführt. Insbesondere ist das zweite Kopplungselement spielfrei in dem ersten Kopplungselement vorgesehen. Das zweite Kopplungselement verbindet dabei insbesondere ein erstes Kopplungselement, das an einer Innenblattschale angeordnet ist, mit einem ersten Kopplungselement, das an einer Mittelblattschale angeordnet ist. Dadurch verbindet das zweite Kopplungselement das Innenblattsegment mit dem Mittelblattsegment. Alternativ ist nur an der Innenblattschale oder nur an der Mittelblattschale ein Schalenelement vorgesehen, das ein erstes Kopplungselement aufweist. Dann wird das zweite Kopplungselement in die Öffnung des ersten Kopplungselements eingeführt und an der Mittelblattschale bzw. Innenblattschale angeordnet. Bei mehreren Schalenelementen sind die ersten Kopplungselemente derart zueinander angeordnet, dass ein erstes Kopplungselement einer Innenblattschale an ein erstes Kopplungselement einer Mittelblattschale grenzt, das wieder an ein erstes Kopplungselement einer bzw. der Innenblattschale grenzt usw. Das zweite Kopplungselement wird dabei durch die jeweilige Öffnung jedes ersten Kopplungselementes geführt. Dadurch sind die einzelnen Schalenelemente und somit das Innenblattsegment mit dem Mittelblattsegment gekoppelt.

In einer besonders bevorzugten Ausführungsform ist das erste Kopplungselement aus Kunststoff hergestellt, insbesondere ist das erste Kopplungselement als Spritzgussteil ausgeführt. Dadurch ist die Form des Kopplungselements nahezu frei wählbar. Zudem lassen sich die Spritzgussteile in einer großen Stückzahl kostengünstig herstellen. Eine entsprechende Formgenauigkeit ist gegeben.

Vorzugsweise ist das erste Kopplungselement in die Ausnehmung des wenigstens einen Schalenelements eingerastet. Das erste Kopplungselement gleitet somit in die Ausnehmung des wenigstens einen Schalenelements und hackt sich dann dort fest bzw. schnappt dort ein. Dies geschieht dadurch, dass sich das erste Kopplungselement beim Erreichen der Ausnehmung aufgrund der nachlassenden Kraft selbsttätig in seine Ausgangslage vor dem Einführen in das Schalenelement zurückbewegt. Dadurch wird ein Geräusch erzeugt. Vorteilhaft hierbei ist, dass durch das Geräusch das Festsitzen der Verbindung signalisiert wird. Zudem wird eine Verbindung zwischen dem ersten Kopplungselement und dem Schalenelement ohne zusätzliche Verbindungsmittel hergestellt, so dass sich der Montageaufwand gering hält.

In einer bevorzugten Ausführungsform weist das erste Kopplungselement wenigstens eine Einbuchtung zum Aufnehmen eines Dichtungselements auf. Dabei ist das Dichtungselement zwischen dem ersten Kopplungselement und wenigstens einer der Innenblattschale oder der Mittelblattschale vorgesehen. Ein solches Dichtungselement fügt sich dabei in die Einbuchtung des ersten Kopplungselements und sitzt somit fest darin. Zudem wird es durch die vorgegebene Einbuchtung zentriert, es ist demnach an der richtigen Stelle angeordnet. Durch das Dichtungselement wird verhindert, dass bspw. Klebstoff, mit dem das Schalenelement und die Innenblattschale und/oder Mittelblattschale verbunden sind, in die Ausnehmung des Schalenelements läuft. Zudem ist ein solches Dichtungselement insbesondere einstückig ausgeführt, es ist demnach insbesondere bei mehreren Schalenelementen unter allen Schalenelementen vorgesehen. Dadurch werden die einzelnen Schalenelemente zusammengehalten und zentriert.

In einer besonders bevorzugten Ausführungsform ist das zweite Kopplungselement als länglicher Körper ausgeführt, der in die jeweilige Öffnung mehrerer erster Kopplungselemente einführbar ist, so dass die Innenblattschale mit der Mittelblattschale koppelbar ist. Der längliche Körper ist dabei insbesondere stangenähnlich ausgeführt. Er nimmt die Form der Öffnung an, so dass er spielfrei dort eingebracht werden kann. Die mehreren ersten Kopplungselemente sind dabei in den ersten Schalenelementen angeordnet. Die ersten Schalenelemente sind dabei vorzugsweise abwechselnd auf der Innenblattschale und der Mittelblattschale angeordnet. Dadurch entsteht eine scharnierartige Verbindung zwischen der Innenblattschale und der Mittelblattschale.

Vorzugsweise ist das Schalenelement aus einem Faserverbundwerkstoff, insbesondere einem glasfaserverstärktem Kunststoff hergestellt. Glasfasern weisen dabei ein niedriges Elastizitätsmodul auf, also eine große linear-elastische Verformbarkeit der Struktur. Damit ist ein Schalenelement aus glasfaserverstärktem Kunststoff besonders gut für die Aufnahme der Innenblattschale und/oder Mittelblattschale sowie zur Aufnahme des zweiten Kopplungselements geeignet.

In einer bevorzugten Ausführungsform ist das Schalenelement U-förmig und/oder als Parallelschlaufe ausgeführt. Dabei ist zwischen den beiden parallelen Innenseiten die Innenblattschale und/oder Mittelblattschale aufgenommen. In dem kreisförmigen Abschnitt ist die Ausnehmung zum Aufnehmen des ersten Kopplungselements vorgesehen. Eine Parallelschlaufe hat zudem bspw. gegenüber einer Augenschlaufe den Vorteil, dass keine ungünstigen Aufziehspannungen an den Seitenbereichen entstehen. Somit ist eine stabile Anbindung des Schalenelements an die Innenblattschale und/oder Mittelblattschale möglich.

In einer besonders bevorzugten Ausführungsform ist das wenigstens eine Innenblattsegment und das wenigstens eine Mittelblattsegment formschlüssig miteinander koppelbar.

Vorzugsweise weist das erste Kopplungselement an wenigstens einer Öffnung einen Flansch auf. Dabei liegt der Flansch eines mit einem Mittelblattsegment gekoppelten Innenblattsegments an einem Flansch des ersten Kopplungselements des Mittelblattsegments an. Das Gleiche ist umgekehrt genauso. Der Flansch bildet einen äußeren Rand um die Öffnung herum, dessen Durchmesser größer als der Durchmesser der jeweiligen Öffnung ist. Der Flansch liegt somit nach dem Einrasten des ersten Kopplungselements in das Schalenelement im Bereich der Öffnung vor dem Schalenelement bzw. beim Herstellen einer Kopplung zwischen den einzelnen Schalenelementen. Dadurch liegen nur die Flansche aneinander an. Dies ist besonders vorteilhaft, wenn der Flansch bzw. das erste Kopplungselement aus Kunststoff hergestellt ist. Dann trifft Kunststoff auf Kunststoff. Der Abrieb ist dabei gering.

Weiterhin wird erfindungsgemäß ein Rotorblatt einer Windenergieanlage vorgeschlagen. Das Rotorblatt umfasst dabei wenigstens ein Außenblattsegment, das sich über die Gesamtlänge des Rotorblatts erstreckt, und wenigstens ein Hinterkantensegment nach einem der vorgenannten Ausführungsformen, das mit dem Außenblattsegment verbindbar ist. Dadurch ergeben sich für das Hinterkantensegment die bereits weiter oben stehenden Vorteile in gleichem Maße.

Ein solches Rotorblatt ist dabei bei Windenergieanlagen aller Leistungsklassen, insbesondere in Leistungsklassen im Megawatt-Bereich für Windenergieanlagen mit Rotordurchmessern, die größer als 80 Meter sind, anwendbar.

Vorzugsweise umfasst das Hinterkantensegment dabei ein Innenblattsegment und ein Mittelblattsegment. Das Mittelblattsegment ist mit dem Außenblattsegment über eine Verbindungsseite verbunden und mit dem Innenblattsegment über eine Kopplungseinrichtung verbunden. Das Mittelblattsegment kann dabei insbesondere schon in der Fertigungshalle mit dem Außenblattsegment verbunden werden, ohne dass bei dem Transport logistische Probleme auftreten. Das Innenblattsegment kann dann separat zum Aufstellungsort der Windenergieanlage transportiert werden und vor Ort angebracht werden. Dies reduziert den Montageaufwand am Aufstellungsort und reduziert somit die Aufstellungszeit der Anlage.

Zudem wird erfindungsgemäß eine Windenergieanlage vorgeschlagen. Die Windenergieanlage umfasst dabei einen Turm, eine Gondel und einen Rotor. Dabei ist an dem Rotor wenigstens ein Rotorblatt nach einer der vorgenannten Ausführungsformen vorgesehen. Somit ergeben sich auch die vorgenannten Vorteile für die erfindungsgemäße Windenergieanlage.

Weiterhin wird erfindungsgemäß eine Kopplungseinrichtung zum Koppeln wenigstens eines Innenblattsegments eines Hinterkantensegments eines Rotorblatts einer Windenergieanlage mit wenigstens einem Mittelblattsegment eines Hinterkantensegments eines Rotorblatts einer Windenergieanlage vorgeschlagen. Die Kopplungseinrichtung umfasst dabei wenigstens zwei Schalenelemente mit einer Ausnehmung. Dabei ist ein erstes Schalenelement mit einer Innenblattschale des wenigstens einen Innenblattsegments und ein zweites Schalenelement mit einer Mittelblattschale des wenigstens einen Mittelblattsegments verbindbar und jedes Schalenelement weist jeweils ein erstes Kopplungselement zum Einsetzen in die Ausnehmung mit einer Öffnung auf, und ein zweites Kopplungselement zum Einführen in die jeweiligen Öffnungen des jeweils ersten Kopplungselements, so dass das wenigstens eine Innenblattsegment und das wenigstens eine Mittelblattsegment miteinander koppelbar sind. Dabei weisen die zwei Schalenelemente jeweils zwei parallel zueinander angeordnete Innenseiten auf, die jeweils dazu vorbereitet sind, eine auf das Hinterkantensegment wirkende Kraft zentrisch in die Kopplungseinrichtung einzuleiten.

Besonders vorteilhaft hierbei ist, dass die einzelnen Elemente der Kopplungseinrichtung separat voneinander herstellbar sind und somit vorgegebene Fertigungstoleranzen eingehalten werden können. Zudem werden Schädigungen an der Kopplungseinrichtung durch das Auftreten von Momenten bei einer Lasteinleitung vermieden.

Nachfolgend wird die Erfindung exemplarisch anhand von Ausführungsbeispielen unter Bezugnahme auf die begleitenden Figuren näher erläutert.
- Figur 1: zeigt eine Windenergieanlage gemäß der vorliegenden Erfindung.
- Figur 2: zeigt einen Ausschnitt eines Rotorblatts mit einem Hinterkantensegment gemäß einem Ausführungsbeispiel der Erfindung.
- Figur 3: zeigt eine Detailansicht des Hinterkantensegments nach Figur 2.
- Figur 4: zeigt eine Schnittansicht der Figur 3.
- Figur 5: zeigt einen Ausschnitt einer Kopplungseinrichtung.
- Figur 6: zeigt ein erstes Kopplungselement.

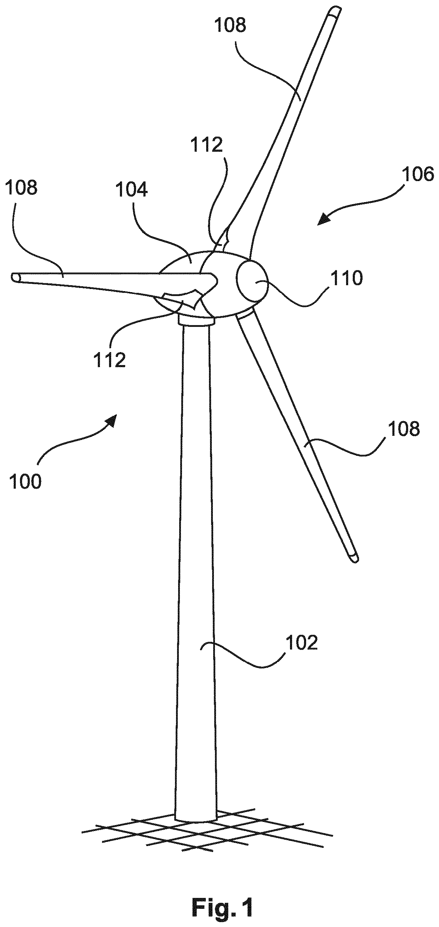

Die Erläuterung der Erfindung anhand von Beispielen unter Bezugnahme auf die Figuren erfolgt im Wesentlichen schematisch und die Elemente, die in der jeweiligen Figur erläutert werden, können darin zur verbesserten Anschauung überzeichnet und andere Elemente vereinfacht sein. So veranschaulicht beispielsweise Figur 1 eine Windenergieanlage als solche schematisch, so dass das vorgesehene Hinterkantensegment an dem Rotorblatt nicht im Detail erkennbar ist.

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen (nicht dargestellten) Generator in der Gondel 104 an.

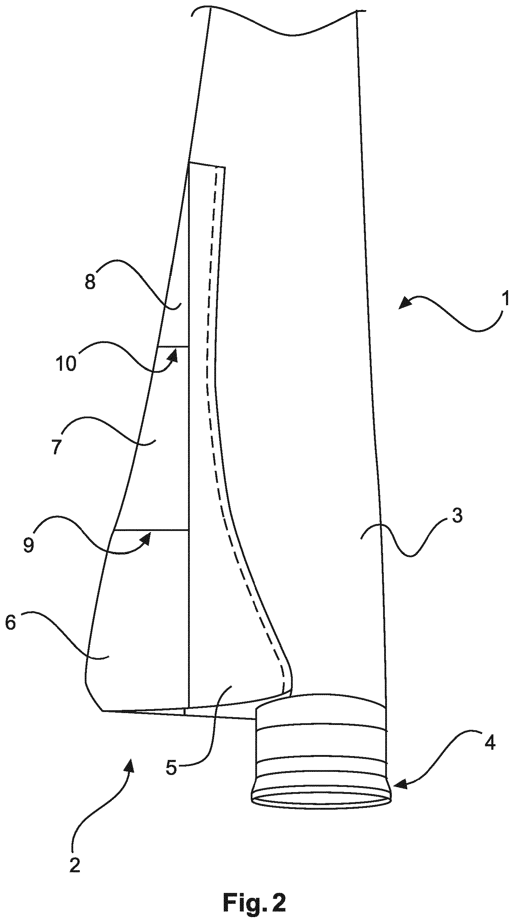

Die Rotorblätter 108 weisen jeweils ein Hinterkantensegment 112 auf, mittels dessen sie als anschmiegsame Rotorblätter ausgebildet sind. Das Hinterkantensegment 112 kann dabei in mehrere Segmente unterteilt sein, wie sich aus der nachfolgenden Figur 2 erkennen lässt.

Figur 2 zeigt einen Ausschnitt eines Windenergieanlagen-Rotorblatts 1, das ein Außenblattsegment 3 sowie ein Hinterkantensegment 2 und eine Rotorblattwurzel 4 aufweist. Es ist zu erkennen, dass das Rotorblatt 1 im Bereich der Rotorblattwurzel 4 die größte Profiltiefe aufweist. Das Rotorblatt 1 von Figur 2 kann dem Rotorblatt 108 gemäß Figur 1 entsprechen.

Das Hinterkantensegment 2 ist unterteilt in ein Mittelblattsegment 5 und drei Innenblattsegmente 6, 7 und 8. Die Innenblattsegmente 6, 7 und 8 sind mit dem Mittelblattsegment 5 verbunden. Das Mittelblattsegment 5 ist wiederum mit dem Außenblattsegment 3 verbunden. Die Innenblattsegmente 6, 7 und 8 sind benachbart zueinander angeordnet und liegen an Unterteilungsebenen 9, 10 aneinander an. Dadurch wird die Hinterkante des Rotorblatts 1 gebildet. Alternativ kann das Innenblattsegment auch einteilig oder aus zwei bis fünf Segmenten ausgeführt sein. Ein solches Rotorblatt 1 hat dabei den Vorteil, dass das Mittelblattsegment beispielsweise direkt in der Fertigung an das Außenblattsegment angebracht werden kann und somit weniger Montageaufwand vor Ort entsteht und der Aufbau der Anlage an ihrem Standort beschleunigt werden kann. Trotzdem ist das Rotorblatt 1 immer noch gut zu transportieren. Der logistische Aufwand ist im Gegensatz zu einem komplett montierten Rotorblatt reduziert.

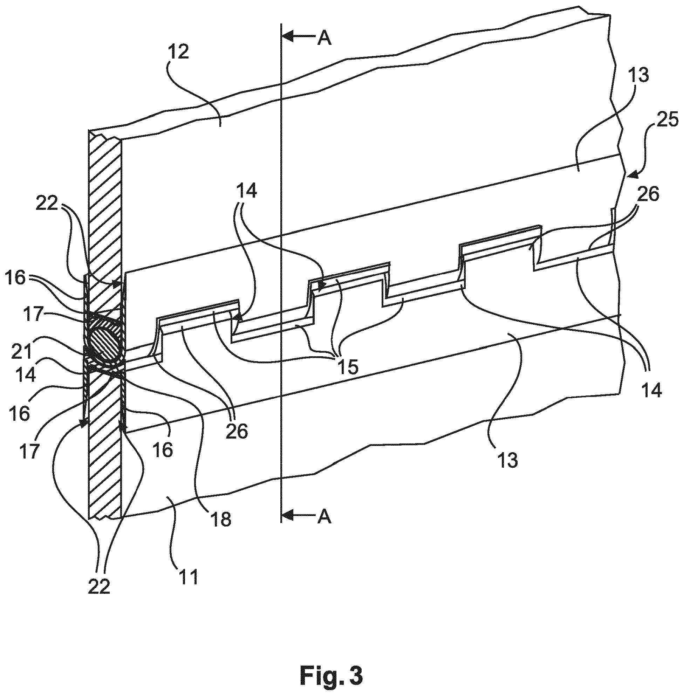

Die Kopplung der jeweiligen Innenblattsegmente 6, 7 und 8 mit dem Mittelblattsegment 5 zu einem Hinterkantensegment 2 ist in Figur 3 zu erkennen. Wie in Figur 3 zu erkennen ist, weist das Mittelblattsegment eine Mittelblattschale 11 und das Innenblattsegment eine Innenblattschale 12 auf. Die Mittelblattschale 11 und die Innenblattschale 12 sind über eine Kopplungseinrichtung 25 gekoppelt. An der Mittelblattschale 11 und an der Innenblattschale 12 ist jeweils ein Schalenelement 13 vorgesehen. Das Schalenelement 13 umschließt die Mittelblattschale 11 bzw. die Innenblattschale 12. Die jeweiligen Schalenelemente 13 sind als Parallelschlaufe ausgeführt und weisen somit jeweils zwei parallel zueinander angeordnete Innenseiten 22 auf, zwischen denen die Mittelblattschale 11 bzw. die Innenblattschale 12 vorgesehen ist. Die parallel zueinander angeordneten Innenseiten 22 laufen in einem runden Abschnitt 26 zusammen. Das jeweilige Schalenelement 13 weist mehrere Ausnehmungen 14 auf, in denen jeweils ein erstes Kopplungselement 15 vorgesehen ist. Das erste Kopplungselement 15 weist in der Ausnehmung 14 eine halbrunde Form auf, die angepasst ist an den runden Abschnitt 26 des jeweils gegenüberliegenden Schalenelements 13, welches in dieser runden Form aufliegt. Zwischen den jeweiligen Innenseiten 22 und der Mittelblattschale 11 bzw. der Innenblattschale 12 ist ein Klebstoff 16 vorgesehen, um eine beidseitige Verbindung der Mittelblattschale 11 bzw. Innenblattschale 12 mit der Kopplungseinrichtung 25 herzustellen. Somit sitzt das jeweilige Schalenelement 13 fest auf der Mittelblattschale 11 bzw. auf der Innenblattschale 12.

Das erste Kopplungselement 15 ist dabei in die Ausnehmung 14 des Schalenelements 13 eingerastet. Das erste Kopplungselement 15 weist eine kreisrunde Öffnung 18 auf, in die ein runder länglicher Stab 21 als Ausführungsbeispiel eines zweiten Kopplungselements eingeführt ist. Das zweite Kopplungselement 21 reicht dabei durch die gesamten ersten Kopplungselemente 15 hindurch, so dass die Mittelblattschale 11 mit der Innenblattschale 12 verbunden ist. Zwischen dem ersten Kopplungselement 15 und der Mittelblattschale 11 bzw. der Innenblattschale 12 ist jeweils eine Dichtung 17 vorgesehen. Durch die Dichtung 17 können die mehreren ersten Kopplungselemente 15 zusammengehalten werden und zentriert werden. Zudem wird verhindert, dass der Klebstoff 16 beispielsweise in die Ausnehmung 14 des Schalenelements verläuft.

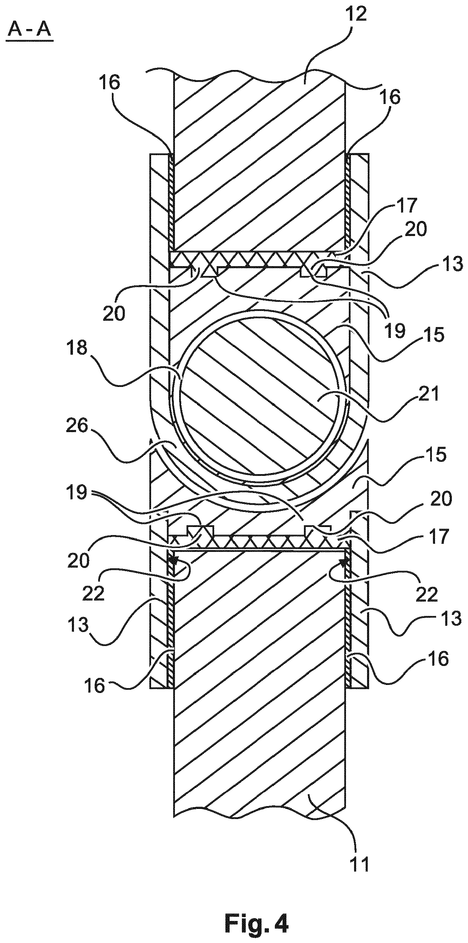

Figur 4 zeigt einen Schnitt A-A der Figur 3. Dabei ist in Figur 4 die Innenblattschale 12 zu erkennen, die von dem u-förmigen bzw. als Parallelschlaufe ausgeführten Schalenelement 13 umschlossen ist. Die Mittelblattschale 11 nimmt den runden Abschnitt 26 des ersten Kopplungselements 15 in dem in der Ausnehmung 14 angeordneten ersten Kopplungenelements 15 auf. Das u-förmige Schalenelement 13 ist auf zwei Seiten mit der Blattschale 12 über einen Klebstoff 16 verbunden. Durch diese beidseitige Verbindung wird eine zentrierte Lasteinleitung gewährleistet. Ein durch eine einseitige Lasteinleitung entstehendes Moment wird vermieden. Innerhalb der u-förmigen Blattschale 13 ist ein erstes Kopplungselement 15 angeordnet. Das erste Kopplungselement 15 ist dabei vorzugsweise aus einem Kunststoff hergestellt und weist eine Öffnung 18 auf. Zudem weist das erste Kopplungselement 15 zwei Einbuchtungen 19 auf, in die jeweils eine Lippe 20 einer Dichtung 17 eingeführt ist. Die Dichtung 17 ist dabei zwischen der Blattschale 12 und dem ersten Kopplungselement 15 angeordnet. Dadurch wird vermieden, dass Klebstoff oder Sonstiges in den Kopplungsbereich gelangt. Zudem kann die Dichtung 17 zur Stabilisierung bzw. Positionierung der einzelnen ersten Kopplungselemente 15 verwendet werden. Über die Längsachse eines Rotorblatts sind dabei mehrere erste Kopplungselemente 15 vorgesehen, die durch eine durchgängige Dichtung 17 in die richtige Position gebracht werden können.

In die Öffnung 18 ist ein stabähnliches zweites Kopplungselement 21 eingeführt, welches die verschiedenen erste Kopplungselemente und somit die Mittelblattschalen 11 und die Innenblattschale 12 des Mittelblattsegments 5 bzw. des Innenblattsegments 6, 7, 8 miteinander verbindet. Das stabähnliche Kopplungselement 21ist an die Form der Öffnung 18 angepasst. In Figur 4 wird entsprechend ein rohrförmiges bzw. rundes stabähnliches zweites Kopplungselement 21 verwendet. Das zweite Kopplungselement 21 ist dabei vorzugsweise spielfrei in die Öffnung 18 eingeführt bzw. eingebracht.

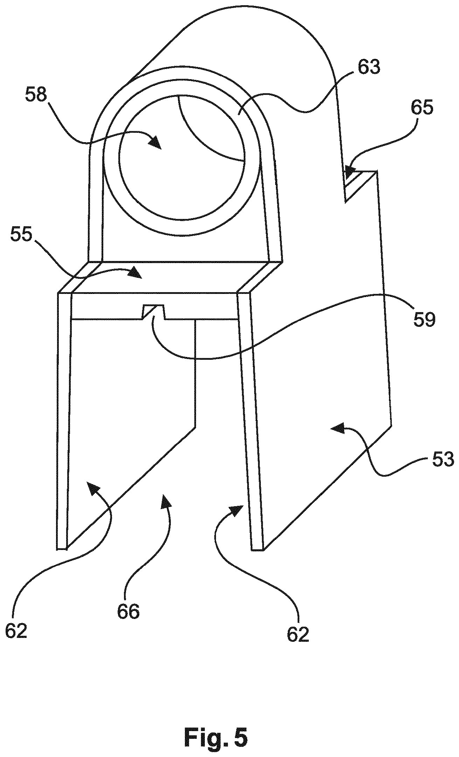

Figur 5 zeigt einen Ausschnitt einer Kopplungseinrichtung 65 mit einem Schalenelement 53, in das ein erstes Kopplungselement 55 eingerastet ist. Das Schalenelement 53 weist dabei zwei parallel zueinander angeordnete Innenseiten 62 auf, die einen Aufnahmeraum 66 zum Aufnehmen einer Innenblattschale und/oder Mittelblattschale bildet. Das erste Kopplungselement weist eine Einbuchtung 59 auf, die zum Aufnehmen eines Dichtungselements vorgesehen ist. Zudem weist das erste Kopplungselement 55 eine Öffnung 58 auf, in die ein zweites Kopplungselement (nicht dargestellt), wie beispielsweise ein länglicher runder Stab einführbar ist. Das erste Kopplungselement 55 weist zudem um die Öffnung 58 herum einen hervorstehenden Rand 63 als Ausführungsbeispiel eines Flansches auf, dessen äußerer Querschnitt größer als der Querschnitt der Öffnung 58 ist. Dieser Rand 63 liegt bei der Verbindung des Schalenelements 53 mit einem weiteren Schalenelement an einen nahezu gleich ausgestalteten Rand an. Dadurch wird vermieden, dass die Schalenelemente gegeneinander reiben.

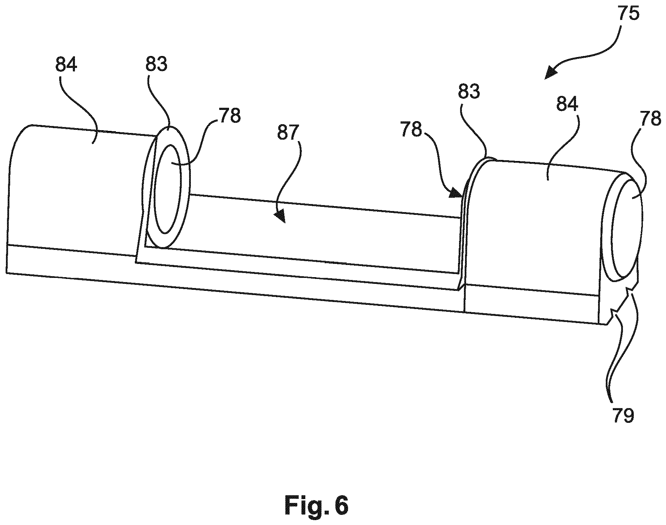

Figur 6 zeigt ein Ausführungsbeispiel eines ersten Kopplungselements 75. Das erste Kopplungselement 75 weist zwei Erhöhungen auf, in denen jeweils eine kreisrunde Öffnung 78 vorgesehen ist, in die ein zweites Kopplungselement aufgenommen werden kann. Das erste Kopplungselement 75 weist zudem zwei Einbuchtungen 79 auf, die zur Aufnahme eines Dichtungselements vorgesehen sind. An den Öffnungen 78 ist jeweils ein äußerer Rand 83 vorgesehen, der über die Erhöhungen 84 hinausragt. Zwischen den beiden Erhöhungen 84 und den äußeren Rändern 83 ist eine Vertiefung 87 vorgesehen, in der ein entsprechendes Gegenstück, also ein Schalenelement mit dem das erste Kopplungselement verbunden werden soll, aufgenommen werden kann. Die Vertiefung 87 weist dabei eine halbrunde Form auf und ist somit entsprechend an die runde Erhöhung des anliegenden Schalenelements angepasst.

Ein solches erstes Kopplungselement 75 ist dabei vorzugsweise aus Kunststoff hergestellt. Beim Einführen eines Schalenelements in die Vertiefung 87 liegen die äußeren Ränder 83 des dargestellten ersten Kopplungselements 75 sowie eines weiteren ersten Kopplungselements aneinander. Somit liegt vorteilhafterweise Kunststoff an Kunststoff an.

## Patentansprüche

1. Windenergieanlagen-Rotorblatt-Hinterkantensegment (2, 112) zum Vergrößern einer Profiltiefe des Rotorblatts (1, 108) einer Windenergieanlage (100), mit:
- wenigstens einem Innenblattsegment (6, 7, 8) mit einer Innenblattschale (12),
- wenigstens einem Mittelblattsegment (5) mit einer Mittelblattschale (11),
wobei das wenigstens eine Mittelblattsegment (5) und das wenigstens eine Innenblattsegment (6, 7, 8) über eine Kopplungseinrichtung (25) miteinander koppelbar sind,
**dadurch gekennzeichnet, dass** die Kopplungseinrichtung (25) zwei Schalenelemente (13, 53) mit zwei parallel zueinander angeordneten Innenseiten (22, 62) aufweist, die jeweils einen Aufnahmeraum (66) bilden,
wobei der Aufnahmeraum (66) jeweils zum Aufnehmen wenigstens einer der Innenblattschale (12) oder Mittelblattschale (11) ausgestaltet ist, und
wobei die zwei Aufnahmeräume (66) jeweils mit den zwei Innenseiten (22, 62) an eine Dicke der Innenblattschale (12) oder der Mittelblattschale (11) angepasst sind,
wobei die zwei Innenseiten (22, 62) die in dem jeweiligen Aufnahmeraum (66) eingeführte Innenblattschale (11) oder die eingeführte Mittelblattschale (11) teilweise umschließen, so dass eine auf das Hinterkantensegment (2, 112) wirkende Kraft über die zwei Innenseiten (22, 62) zentrisch in die Kopplungseinrichtung (25) eingeleitet wird,
wobei die zwei Schalenelemente (13, 53) jeweils Ausnehmungen (14) und erste Kopplungselemente (15, 65) aufweisen,
wobei die ersten Kopplungselemente (15, 65) eines Schalenelementes (13, 53) in den Ausnehmungen (14) des anderen Schalenelementes (13, 53) vorgesehen sind.

2. Windenergieanlagen-Rotorblatt-Hinterkantensegment (2, 112) nach Anspruch 1, wobei das erste Kopplungselement (15, 65) eine Öffnung (18, 58) zum Aufnehmen eines zweiten Kopplungselements (21) zum Herstellen der Kopplung des Innenblattsegments (6, 7, 8) mit dem Mittelblattsegment (5) aufweist.

3. Windenergieanlagen-Rotorblatt-Hinterkantensegment (2, 112) nach Anspruch 2, wobei das erste Kopplungselement (15, 65) aus Kunststoff hergestellt ist, insbesondere als Spritzgussteil ausgeführt ist.

4. Windenergieanlagen-Rotorblatt-Hinterkantensegment (2, 112) nach einem der Ansprüche 2 bis 3, wobei das erste Kopplungselement (15, 65) in die Ausnehmung (14) des Schalenelements (13, 53) eingerastet ist.

5. Windenergieanlagen-Rotorblatt-Hinterkantensegment (2, 112) nach einem der Ansprüche 2 bis 4, wobei das erste Kopplungselement (15, 65) wenigstens eine Einbuchtung (19, 59) zum Aufnehmen eines Dichtungselements (17) aufweist, wobei das Dichtungselement (17) zwischen dem ersten Kopplungselement (15, 65) und der Innenblattschale (12) und/oder der Mittelblattschale (11) vorgesehen ist.

6. Windenergieanlagen-Rotorblatt-Hinterkantensegment (2, 112) nach einem der Ansprüche 3 bis 5, wobei das zweite Kopplungselement (21) als länglicher Körper ausgeführt ist, der in die jeweilige Öffnung (18, 58) mehrerer erster Kopplungselemente ( 15, 65) einführbar ist, so dass die Innenblattschale (12) mit der Mittelblattschale (11) koppelbar ist.

7. Windenergieanlagen-Rotorblatt-Hinterkantensegment (2, 112) nach einem der vorstehenden Ansprüche, wobei das Schalenelement (13, 53) aus einem Faserverbundwerkstoff, insbesondere einem glasfaserverstärktem Kunststoff, hergestellt ist.

8. Windenergieanlagen-Rotorblatt-Hinterkantensegment (2, 112) nach einem der vorstehenden Ansprüche, wobei das Schalenelement (13, 53) U-förmig und/oder als Parallelschlaufe ausgeführt ist.

9. Windenergieanlagen-Rotorblatt-Hinterkantensegment (2, 112) nach einem der vorstehenden Ansprüche, wobei das wenigstens eine Innenblattsegment (6, 7, 8) und das wenigstens eine Mittelblattsegment (5) formschlüssig miteinander koppelbar sind.

10. Windenergieanlagen-Rotorblatt-Hinterkantensegment (2, 112) nach einem der vorstehenden Ansprüche 1 bis 9, wobei das erste Kopplungselement (15, 65) an wenigstens einer Öffnung (18, 58) einen Flansch (63, 83) aufweist, wobei der Flansch (63, 83) eines mit einem Mittelblattsegment (5) gekoppelten Innenblattsegments (6, 7, 8) an einem Flansch des ersten Kopplungselements (15, 65) des Mittelblattsegments (5) anliegt.

11. Windenergieanlagen-Rotorblatt (1, 108) mit:
- wenigstens einem Außenblattsegment (3), das sich über die Gesamtlänge des Rotorblatts (1, 108) erstreckt, und
- wenigstens einem Hinterkantensegment (2, 112) nach einem der vorstehenden Ansprüche, das mit dem Außenblattsegment (3) koppelbar ist.

12. Windenergieanlagen-Rotorblatt (1, 108) nach Anspruch 11, wobei das Hinterkantensegment (2, 112) wenigstens ein Innenblattsegment (6, 7, 8) und ein Mittelblattsegment (5) aufweist und das Mittelblattsegment (5) mit dem Außenblattsegment (3) über eine Verbindungsseite verbunden ist und mit dem wenistens einen Innenblattsegment (6, 7, 8) über eine Kopplungseinrichtung (25) koppelbar ist.

13. Windenergieanlage (100) mit
einem Turm (102),
einer Gondel (104),
einem Rotor (106),
wobei an dem Rotor (106) wenigstens ein Rotorblatt (1, 108) nach einem der Ansprüche 11 oder 12 angeordnet ist.

## Claims

1. Trailing-edge segment (2, 112) of a wind-turbine rotor blade for increasing a profile depth of the rotor blade (1, 108) of a wind turbine (100), comprising:
- at least one inner blade segment (6, 7, 8), having an inner blade shell (12),
- at least one middle blade segment (5), having a middle blade shell (11),
the at least one middle blade segment (5) and the at least one inner blade segment (6, 7, 8) being able to be coupled to each other via a coupling means (25), and
**characterized in that** the coupling means (25) having two shell elements (13, 53), having two inner sides (22, 62) that are parallel to each other each forming a receiving space (66),
wherein the receiving space (66) each being designed to receive at least one of the inner blade shell (12) or middle blade shell (11), and
wherein the two receiving spaces (66) are adapted with the two inner sides (22, 62) to a thickness of the inner blade shell (12) or the middle blade shell (11),
wherein the two inner sides (22, 62) at least partly enclose the inner blade shell (11) or the middle blade shell (11) inserted into the receiving space (66), in such a manner that a force acting upon the trailing-edge segment (2, 112) is introduced via the two inner sides (22, 62) centrically into the coupling means (25),
wherein the two shell elements (13, 53) each having a recess (14) and first coupling elements (15, 65),
wherein the first coupling elements (15, 65) of a shell element (13, 53) are arranged in the recesses (14) of the other shell element (13, 53).

2. Trailing-edge segment (2, 112) of a wind-turbine rotor blade according to Claim 1, the first coupling element (15, 65) having an opening (18, 58) for receiving a second coupling element (21), for the purpose of producing the coupling of the inner blade segment (6, 7, 8) to the middle blade segment (5).

3. Trailing-edge segment (2, 112) of a wind-turbine rotor blade according to Claim 2, the first coupling element (15, 65) being produced from plastic, in particular being realized as an injection moulded part.

4. Trailing-edge segment (2, 112) of a wind-turbine rotor blade according to any one of Claims 2 to 3, the first coupling element (15, 65) being latched into the recess (14) of the shell element (13, 53).

5. Trailing-edge segment (2, 112) of a wind-turbine rotor blade according to any one of Claims 2 to 4, the first coupling element (15, 65) having at least one indentation (19, 59) for receiving a sealing element (17), the sealing element (17) being provided between the first coupling element (15, 65) and the inner blade shell (12) and/or the middle blade shell (11).

6. Trailing-edge segment (2, 112) of a wind-turbine rotor blade according to any one of Claims 3 to 5, the second coupling element (21) being realized as an elongate body, which can be inserted in the respective opening (18, 58) of a plurality of first coupling elements (15, 65), such that the inner blade shell (12) can be coupled to the middle blade shell (11).

7. Trailing-edge segment (2, 112) of a wind-turbine rotor blade according to any one of the preceding claims, the shell element (13, 53) being produced from a fibrous composite material, in particular a glass-fibre-reinforced plastic.

8. Trailing-edge segment (2, 112) of a wind-turbine rotor blade according to any one of the preceding claims, the shell element (13, 53) being realized in the shape of a U and/or as a parallel loop.

9. Trailing-edge segment (2, 112) of a wind-turbine rotor blade according to any one of the preceding claims, the at least one inner blade segment (6, 7, 8) and the at least one middle blade segment (5) being able to be coupled to each other in a form-fitting manner.

10. Trailing-edge segment (2, 112) of a wind-turbine rotor blade according to any one of the preceding Claims 1 - 9, the first coupling element (15, 65) having a flange (63, 83) at at least one opening (18, 58), the flange (63, 83) of an inner blade segment (6, 7, 8) that is coupled to a middle blade segment (5) bearing against a flange of the first coupling element (15, 65) of the middle blade segment (5).

11. Wind-turbine rotor blade (1, 108), comprising:
- at least one outer blade segment (3), which extends over the entire length of the rotor blade (1, 108), and
- at least one trailing-edge segment (2, 112) according to any one of the preceding claims, which can be coupled to the outer blade segment (3).

12. Wind-turbine rotor blade (1, 108) according to Claim 11, wherein the trailing-edge segment (2, 112) having at least one inner blade segment (6, 7, 8) and a middle blade segment (5), and the middle blade segment (5) being connected to the outer blade segment (3) via a connecting side, and being able to be coupled to the at least one inner blade segment (6, 7, 8) via a coupling means (25).

13. Wind turbine (100), comprising
a tower (102),
a nacelle (104),
a rotor (106),
at least one rotor blade (1, 108) according to any one of Claims 12 or 13 being provided on the rotor (106).

## Revendications

1. Segment de bord de fuite de pale de rotor d'éolienne (2, 112) pour agrandir une profondeur de profilé de la pale de rotor (1, 108) d'une éolienne (100), avec :
- au moins un segment de pale intérieur (6, 7, 8) avec une coque de pale intérieure (12),
- au moins un segment de pale central (5) avec une coque de pale centrale (11),
dans lequel l'au moins un segment de pale central (5) et l'au moins un segment de pale intérieur (6, 7, 8) peuvent être couplés l'un à l'autre par l'intermédiaire d'un dispositif de couplage (25),
**caractérisé en ce que** le dispositif de couplage (25) présente deux éléments de coque (13, 53) avec deux côtés intérieurs (22, 62) disposés de manière parallèle l'une par rapport à l'autre, qui forment respectivement un espace de réception (66)
dans lequel l'espace de réception (66) est configuré respectivement pour recevoir au moins une parmi la coque de pale intérieure (12) ou la coque de pale centrale (11), et
dans lequel les deux espaces de réception (66) sont adaptés respectivement avec les deux côtés intérieurs (22, 62) à une épaisseur de la coque de pale intérieure (12) ou de la coque de pale centrale (11),
dans lequel les deux côtés intérieurs (22, 62) renferment en partie la coque de pale intérieure (11) introduite dans l'espace de réception (66) respectif ou la coque de pale centrale (11) introduite de sorte qu'une force agissant sur le segment de bord de fuite (2, 112) est appliquée par l'intermédiaire des deux côtés intérieurs (22, 62) de manière centrée dans le dispositif de couplage (25),
dans lequel les deux éléments de coque (13, 53) présentent respectivement des évidements (14) et des premiers éléments de couplage (15, 65),
dans lequel les premiers éléments de couplage (15, 65) d'un élément de coque (13, 53) sont prévus dans les évidements (14) de l'autre élément de coque (13, 53).

2. Segment de bord de fuite de pale de rotor d'éolienne (2, 112) selon la revendication 1, dans lequel le premier segment de couplage (15, 65) présente une ouverture (18, 58) pour recevoir un deuxième élément de couplage (21) pour établir le couplage du segment de pale intérieur (6, 7, 8) au segment de pale central (5).

3. Segment de bord de fuite de pale de rotor d'éolienne (2, 112) selon la revendication 2, dans lequel le premier élément de couplage (15, 65) est fabriqué à partir de matière plastique, en particulier est réalisé en tant que pièce moulée par injection.

4. Segment de bord de fuite de pale de rotor d'éolienne (2, 112) selon l'une quelconque des revendications 2 à 3, dans lequel le premier élément de couplage (15, 65) est enclenché dans l'évidement (14) de l'élément de coque (13, 53).

5. Segment de bord de fuite de pale de rotor d'éolienne (2, 112) selon l'une quelconque des revendications 2 à 4, dans lequel le premier élément de couplage (15, 65) présente au moins un bombement concave (19, 59) pour recevoir un élément d'étanchéité (17), dans lequel l'élément d'étanchéité (17) est prévu entre le premier élément de couplage (15, 65) et la coque de pale intérieure (12) et/ou la coque de pale centrale (11).

6. Segment de bord de fuite de pale de rotor d'éolienne (2, 112) selon l'une quelconque des revendications 3 à 5, dans lequel le deuxième élément de couplage (21) est réalisé en tant que corps allongé, qui peut être introduit dans l'ouverture (18, 58) respective de plusieurs premiers éléments de couplage (15, 65) de sorte que la coque de pale intérieure (12) peut être couplée à la coque de pale centrale (11).

7. Segment de bord de fuite de pale de rotor d'éolienne (2, 112) selon l'une quelconque des revendications précédentes, dans lequel l'élément de coque (13, 53) est fabriqué à partir d'un matériau composite à base de fibres, en particulier d'une matière plastique renforcée par des fibres de verre.

8. Segment de bord de fuir de pale de rotor d'éolienne (2, 112) selon l'une quelconque des revendications précédentes, dans lequel l'élément de coque (13, 53) est réalisé en forme de U et/ou en tant que boucle parallèle.

9. Segment de bord de fuite de pale de rotor d'éolienne (2, 112) selon l'une quelconque des revendications précédentes, dans lequel l'au moins un segment de pale intérieur (6, 7, 8) et l'au moins un segment de pale central (5) peuvent être couplés l'un à l'autre par complémentarité de forme.

10. Segment de bord de fuite de pale de rotor d'éolienne (2, 112) selon l'une quelconque des revendications 1 à 9, dans lequel le premier élément de couplage (15, 65) présente sur au moins une ouverture (18, 58) une bride (63, 83), dans lequel la bride (63, 83) d'un segment de pale intérieur (6, 7, 8) couplé à un segment de pale central (5) repose sur une bride du premier élément de couplage (15, 65) du segment de pale central (5).

11. Pale de rotor d'éolienne (1, 108) avec :
- au moins un segment de pale extérieur (3), qui s'étend sur la totalité de la longueur de la pale de rotor (1, 108), et
- au moins un segment de bord de fuite (2, 112) selon l'une quelconque des revendications précédentes, qui peut être couplé au segment de pale extérieur (3).

12. Pale de rotor d'éolienne (1, 108) selon la revendication 11, dans laquelle le segment de bord de fuite (2, 112) présente au moins un segment de pale intérieur (6, 7, 8) et un segment de pale central (5) et le segment de pale central (5) est relié au segment de pale extérieur (3) par l'intermédiaire d'un côté de liaison et peut être couplé à l'au moins un segment de pale intérieur (6, 7, 8) par l'intermédiaire d'un dispositif de couplage (25).

13. Eolienne (100) avec
une tour (102),
une nacelle (104),
un rotor (106),
dans laquelle au moins une pale de rotor (1, 108) selon l'une quelconque des revendications 11 ou 12 est disposée sur le rotor (106).
